# Europäisches Patentamt

## European Patent Office

### Office européen des brevets

(19)

(11) Numéro de publication: **O 022 833**
**B1**

(12)

# FASCICULE DE BREVET EUROPEEN

(45) Date de publication du fascicule du brevet: **15.02.84**

(51) Int. Cl.³: **F 15 B 5/00**

(21) Numéro de dépôt: **80900239.7**

(22) Date de dépôt: **17.01.80**

(86) Numéro de dépôt international:
**PCT/FR80/00006**

(87) Numéro de publication internationale:
**WO 80/01502 24.07.80 Gazette 80/17**

(00) Jointe à la demande no. **80400159.2** (numéro de dépôt de la demande européenne) par décision du **25.05.82.**

(54) DISPOSITIF TRADUCTEUR ELECTROHYDRAULIQUE PERMETTANT NOTAMMENT DE CONTROLER UNE PRESSION DANS UNE TRANSMISSION AUTOMATIQUE.

(30) Priorité: **18.01.79 FR 7901267**

(43) Date de publication de la demande:
**28.01.81 Bulletin 81/4**

(45) Mention de la délivrance du brevet:
**15.02.84 Bulletin 84/7**

(84) Etats contractants désignés:
**BE DE GB IT NL SE**

(56) Documents cités:
**DE - C - 1 273 945**
**FR - A - 1 542 398**
**FR - A - 2 108 389**
**FR - A - 2 174 496**
**GB - A - 1 129 520**

(73) Titulaire: **REGIE NATIONALE DES USINES RENAULT**
**Boîte postale 103 8-10 avenue Emile Zola**
**F-92109 Boulogne-Billancourt (FR)**

(73) Titulaire: **RENAULT VEHICULES INDUSTRIELS**
**Société dite:**
**30 Quai Claude Bernard**
**F-69007 Lyon (FR)**

(72) Inventeur: **BOUVET, Jean-Marie**
**133, rue de Silly**
**92100 Boulogne-Billancourt (FR)**
Inventeur: **Quemerais, Philippe**
**"La Giraud Yzeron"**
**69510 Thurins (FR)**

(74) Mandataire: **Casalonga, Axel**
**BUREAU D.A. CASALONGA OFFICE JOSSE & PETIT Baaderstrasse 12-14**
**D-8000 München 5 (DE)**

EP 0 022 833 B1

Courier Press, Leamington Spa, England.

## Dispositif traducteur électrohydraulique permettant notamment de contrôler une pression dans une transmission automatique

La présente invention est relative à un dispositif traducteur électrohydraulique comprenant un corps de vanne à commande électrique associé à un générateur électronique de commande permettant l'obtention d'une pression proportionnelle à une grandeur électrique de commande. Un tel dispositif peut notamment être utilisé pour contrôler une pression hydraulique dans le circuit de commande d'une transmission automatique en particulier dans une boîte de vitesses automatique à commande hydraulique pour véhicule industriel.

Dans les boîtes de vitesses automatiques de ce type, le système de commande hydraulique comprend habituellement une ou plusieurs valves de régulation destinées à régler une ou plusieurs pressions à un niveau optimal correspondant à un régime de marche déterminé. Ces valves de régulation sont commandées le plus souvent par une pression auxiliaire appelée pression de pilotage. Cette pression auxiliaire doit être proportionnelle à une grandeur électrique représentative des conditions de marche du véhicule, telles que par exemple la vitesse du moteur, la vitesse de rotation de la turbine du convertisseur hydrocinétique que comporte la boîte de vitesses, la vitesse du véhicule, la charge du moteur, etc. Il est donc nécessaire de faire varier avec précision la pression de pilotage fournie à la valve de régulation de façon à suivre parfaitement l'évolution du signal électrique de commande.

Divers dispositifs électrohydrauliques ont déjà été proposés pour l'obtention d'une pression proportionnelle à un tel signal électrique de commande. Pour obtenir des performances satisfaisantes il est nécessaire d'utiliser des constructions complexes et onéreuses. De tels dispositifs, connus sous le nom de servo-valves sont utilisés dans des servo-mécanismes de prix élevé dans l'aéronautique, l'astronautique, les robots etc. Les dispositifs de ce type utilisés dans le domaine industriel courant doivent être plus économiques et donc de construction simplifiée. Les dispositifs classiques ne sont de ce fait pas capables en général de faire varier avec la précision et la reproductibilité désirées la pression hydraulique en fonction des variations du signal électrique.

Certains dispositifs de type connu utilisent par exemple une force d'attraction électromagnétique agissant sur une pièce mobile. Ces dispositifs sont cependant peu précis leur fonctionnement faisant intervenir un retard dans la réponse à un signal de commande. Cette hystérésis provenant vraisemblablement à la fois du circuit magnétique utilisé et du système hydraulique, altère la précision du réglage de pression. Les dispositifs de ce type sont de réalisation complexe et donc de coût élevé ce qui limite leur possibilité d'adaptation aux boîtes de vitesses automatiques. De plus, ils sont fréquemment sensibles aux contraintes extérieures et en particulier aux vibrations.

On connaît également selon le brevet allemand DE—C—1 273 945 une électrovanne munie d'une armature en forme de plateau qui peut coopérer avec une bille d'obturation et une bobine d'attraction. Toutefois ce plateau est soumis à l'action d'un ressort ou maintenu par une membrane. La bobine peut être alimentée en signaux unidirectionnels pulsés. Il n'est pas suggéré cependant que la valeur moyenne des signaux puissent être asservis d'une manière quelconque à un signal de commande.

La présente invention a pour objet un dispositif traducteur électrohydraulique particulièrement économique, permettant de faire varier une pression proportionnellement à un signal électrique de commande qui présente des facilités de construction, une grande simplicité ainsi qu'une absence d'hystéréris et une faible sensibilité aux vibrations assurant ainsi une excellente reproductibilité des résultats.

Le dispositif traducteur électrohydraulique selon l'invention permettant l'obtention d'une pression proportionnelle à un signal de commande comprend une bobine d'électro-aimant montée dans un corps en matériau magnétique et alimentée en signaux électriques unidirectionnels pulsés correspondant au signal de commande précité. Un plateau mobile vibrant disposé au voisinage de l'extrémité frontale de la bobine se trouve soumise à la force d'attraction électromagnétique de la bobine. Une bille d'obturation en matériau non magnétique est interposée entre la bobine et le plateau afin d'obturer plus ou moins un passage pour le fluide hydraulique, en fonction du signal de commande. La bille d'obturation se trouve soumise à une force de répulsion hydraulique. D'autre part la bille est maintenue dans un logement du plateau vibrant de façon à être soumise, par l'intermédiaire du plateau, à une force d'attraction. Afin de pouvoir vibrer, le plateau mobile est monté totalement libre avec un léger jeu périphérique à l'intérieur d'un logement pratiqué à l'extrémité du corps magnétique. Par ailleurs, la valeur moyenne des signaux unidirectionnels pulsés est asservie, selon l'invention, au signal de commande.

Les signaux unidirectionnels pulsés provoquent donc des vibrations du plateau sensiblement autour d'un point périphérique de contact entre le plateau et la surface interne de son logement.

La force d'attraction électromagnétique agissant sur le plateau mobile et de ce fait sur la bille est proportionnelle au courant alimentant la bobine de l'électro-aimant. Ce courant qui est, selon l'invention, unidirectionnel et pulsé présente de ce fait des oscillations d'amplitude et de fréquence déterminées. Pour réduire encore l'hystérésis globale du système on utilise de préférence pour le circuit magnétique du dispositif un matériau magnétique présentant, à la suite d'un recuit approprié, un très faible pourcentage de carbone.

Le plateau mobile présente de préférence dans sa partie centrale des canalisations traversant ledit plateau et débouchant à la périphérie du logement destiné à recevoir la bille. De cette manière, ces canalisations ne peuvent pas être obturées par la bille quelle soit sa position.

Dans un mode de réalisation préféré, la périphérie du plateau mobile est entourée d'une bague en matériau non magnétique, solidaire des bords extrêmes du corps du dispositif. De plus, la surface périphérique de plateau présente avantageusement une dépouille évitant son coincement à l'intérieur de la bague précitée lors du mouvement vibratoire auquel se trouve soumis le plateau mobile de l'invention.

Le générateur électronique de commande du dispositif de l'invention comprend de préférence un circuit d'asservissement de la valeur moyenne du courant dans la bobine d'électro-aimant à la valeur de consigne constituée par le signal de commande. Le générateur électronique comprend également un comparateur recevant le signal de sortie du circuit d'asservissement ainsi qu'un signal périodique extérieur. Il est donc possible grâce à cet asservissement en courant d'envoyer dans la bobine de l'électro-aimant du dispositif de l'invention des signaux pulsés dont la valeur moyenne est asservie à la grandeur de consigne. La force d'attraction électromagnétique s'exerçant sur le plateau et, par voie de conséquence, sur la bille est donc proportionnelle à ce courant.

Dans un mode de réalisation préféré, le circuit d'asservissement comprend en outre une boucle de retour secondaire recevant la valeur instantanée du courant circulant dans la bobine d'électro-aimant.

Une application particulièrement intéressante du dispositif traducteur électrohydraulique de l'invention est le contrôle de pression dans un circuit hydraulique de commande d'une transmission automatique. La bille non magné-. tique soumise à l'action du plateau mobile vibrant du dispositif de l'invention coopère en effet avec un siège de bille et constitue donc de ce fait un orifice de restriction variable pouvant former l'un des éléments d'un potentiomètre hydraulique. La force agissant sur la bille par l'intermédiaire du plateau mobile vibrant étant proportionnelle à la valeur moyenne du courant circulant effectivement dans la bobine de l'électro-aimant, la pression qui en résulte dans le circuit hydraulique est proportionnelle à la grandeur de consigne c'est-à-dire au signal électrique de commande. Cette pression est exempte de toute hystérésis et indépendante des perturbations extérieures, telles que variation de la tension d'alimentation, variation de la température du fluide hydraulique, entraînant une variation de température du bobinage de l'électro-aimant, etc.

La présente invention sera mieux comprise à l'étude d'un mode de réalisation préféré d'un dispositif selon l'invention appliqué à une transmission automatique, décrit de façon détaillée et pris à titre d'exemple nullement limitatif. La description sera illustrée par les dessins annexés, sur lesquels:

la fig. 1 représente très schématiquement la disposition d'ensemble du dispositif traducteur électrohydraulique selon l'invention comprenant le circuit d'asservissement en courant qui lui est associé;

la fig. 2 représente un schéma synoptique du circuit d'asservissement en courant montrant les deux boucles de retour et délivrant le signal de commande à la bobine d'électro-aimant;

la fig. 3 représente schématiquement le mode de réalisation de la partie hydraulique du dispositif traducteur électrohydraulique à plateau;

la fig. 4 illustre un mode de réalisation possible du circuit d'asservissement de la fig. 2; et

la fig. 5 illustre la forme de certains signaux en fonction du temps apparaissant en divers point du circuit d'asservissement de la fig. 4.

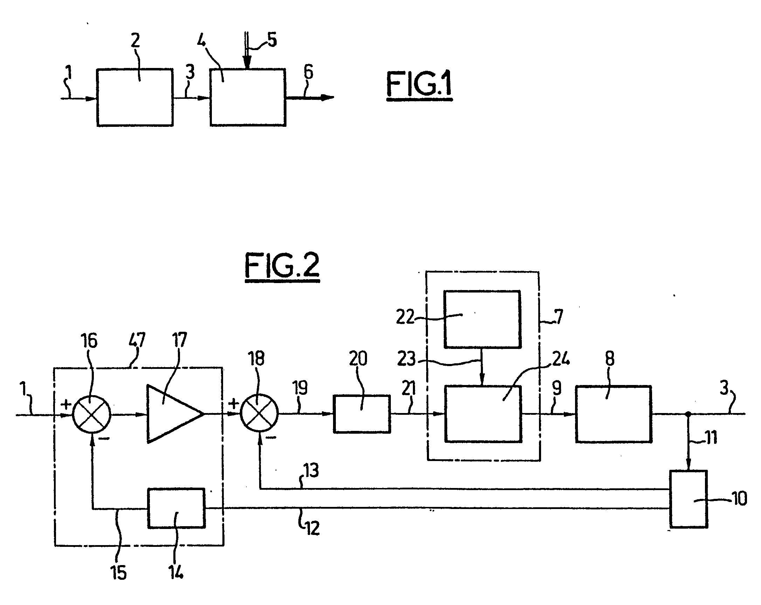

Tel qu'il est représenté sur la fig. 1, le dispositif de l'invention comprend un bloc 2 réalisant l'sservissement en courant et un bloc 4 englobant l'ensemble des éléments hydrauliques du traducteur de l'invention. Le bloc 2 reçoit un signal électrique de commande jouant le rôle de signal de consigne et référencé 1. Le bloc 2 fournit un courant de commande référencé 3 à une bobine d'électro-aimant constituant l'un des éléments du bloc 4. Dans ce mode de réalisation le bloc 4 alimenté en fluide hydraulique 5 fournit à sa sortie une pression référencée 6 proportionnelle à la grandeur de consigne 1.

Tel qu'il est représenté sur le schéma synoptique de la fig. 2, le générateur électronique de commande référencé 2 dans son ensemble sur la fig. 1 se présente sous la forme d'un circuit d'asservissement comportant dans sa chaîne directe un block référencé 7 dans son ensemble qui est un convertisseur de tension-durée. Le bloc 7 envoie dans un circuit de puissance 8 relié à la bobine de l'électro-aimant par l'intermédiaire de la connexion 9, des signaux rectangulaires de commande dont la fréquence est déterminée et constante et dont le rapport cyclique est variable. Ces signaux provoquent dans la bobine de l'électro-aimant un courant pulsé 3 qui est mesuré par le block 10 recevant ce courant par la connexion 11. Le bloc 10 fournit un signal de sortie envoyé d'une part dans une boucle de retour principale 12 et d'autre part dans une boucle de retour secondaire 13 destinée à améliorer les temps de réponse du système global. La boucle de retour principale 12 comprend un circuit intégrateur 14 qui fournit une tension continue, image du courant moyen référencé 3 circulant dans la bobine d'électro-aimant. Cette tension continue véhiculée par la connexion 15 est comparée à la grandeur de consigne 1 dans un comparateur 16 fournissant à sa sortie un signal d'erreur dont la tension est amplifiée par un élément amplificateur 17. La sortie de l'amplificateur 17 est reliée à l'une des entrées d'un deuxième comparateur 18 qui compare la tension d'erreur sortant de l'amplificateur 17 avec le signal issu de la boucle de retour secondaire 13. La tension du signal d'erreur issu du comparateur 18 est envoyée par la connexion 19 dans un bloc 20 constituant un circuit correcteur de type classique susceptible d'améliorer la stabilité du système asservi ainsi que ses performances du point de vue régulation. Le signal résultant transmis par la connexion 21 commande le convertisseur tension durée 7 précédemment évoqué. Ce générateur 7 comprend un oscillateur 22 délivrant des signaux de forme triangulaire de fréquence constante donnée. Ces signaux sont transmis par la connexion 23 à une élément comparateur 24 où ils sont comparés à la tension continue issue du circuit correcteur 20 et véhiculée par la connexion 21. A la sortie du comparateur 24 on obtient des signaux rectangulaires dont la fréquence est identique à celle des signaux issus de l'oscillateur 22 et dont la largeur est proportionnelle à la tension du signal issu du circuit correcteur 20.

De cette manière, le générateur électronique de commande permet de commander le dispositif traducteur électrohydraulique avec des signaux pulsés permettant de s'affranchir des problèmes d'hystérésis et des variations dues à la tension d'alimentation et à la température du bobinage.

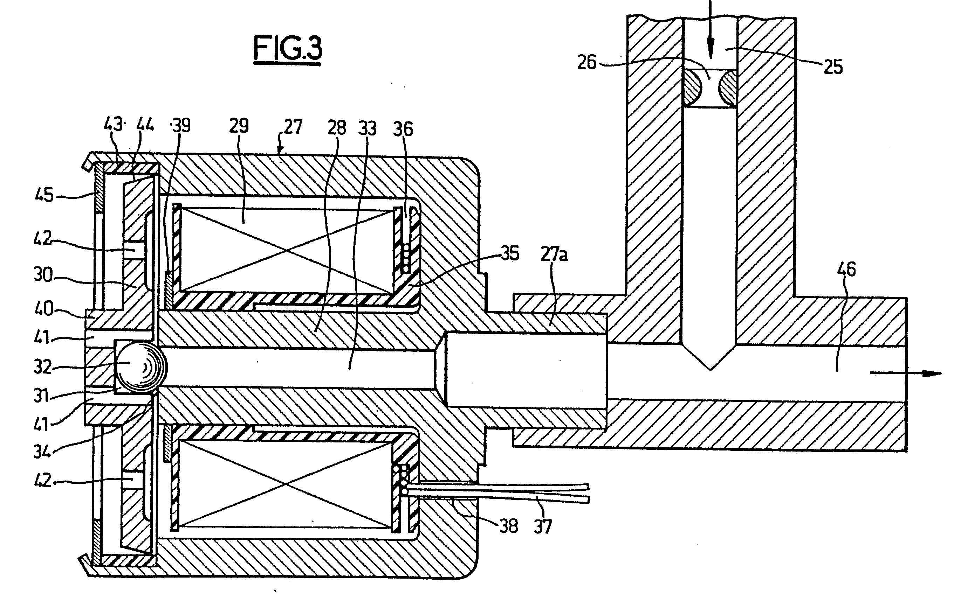

Tel qu'il est représenté sur la fig. 3 l'ensemble du bloc 4 de la fig. 1 est constitué par un potentiomètre hydraulique de principe connu à commande électrique proportionnelle. Le fluide hydraulique sous pression pénètre par la canalisation 25 comportant un premier orifice de restriction 26. Un électro-aimant comprend un corps 27 affectant la forme générale d'un cylindre creux réalisé en matériau magnétique qui peut être par exemple un fer pur. Le corps 27 présente sensiblement dans son axe un noyau fixe 28. L'électro-aimant comprend également une bobine 29 et un plateau 30 réalisé en matériau magnétique disposé au voisinage de l'extrémité frontale de la bobine 29, présentant sensiblement dans son axe un logement 31 recevant une bille 32 réalisée en un matériau non magnétique et faisant office d'obturateur pour l'extrémité ouverte d'un passage central 33 pratiqué dans le noyau fixe 28. La bille 32 est montée entre le plateau 30 et le noyau 28 de la bobine 29.

L'espace compris entre la bille 32 non magnétique et le siége de bille 34 constitue l'orifice de restriction variable du potentiomètre hydraulique.

Le matériau magnétique constituant le corps 27 de l'électro-aimant subit de préférence un recuit spécial après usinage qui a pour effet de diminuer considérablement les pertes par hystérésis à l'intérieur même du circuit magnétique. Le corps 27 définit autour du noyau 28 une enveloppe cylindrique à l'intérieur de laquelle est logé le boîtier 35 de la bobine d'électro-aimant 29. Le corps 27 comporte également un embout de raccordement 27a permettant le montage d'une canalisation d'alimentation en fluide hydraulique communiquant avec le passage central 33. Le boîtier 35 est réalisé en matériau non magnétique tel que par exemple en matière plastique. Un des flancs radiaux du boîtier 35 vient en contact avec la partie de fond fermée de l'enveloppe cylindrique du corps 27 et comporte un mince gorge radiale 36 à l'intérieu de laquèlle sont réalisées les connexions des fils d'alimentation de la bobine 29 aux fils d'alimentation extérieurs 37. Les fils d'alimentation 37 sont conduits à l'extérieur du corps 27 par un trou 38 percé dans la partie de fond fermée du corps 27. Cette disposition des connexions de sortie présente l'avantage de réduire le volume mort affecté aux fils de liaison. Cette disposition permet donc de bobiner un maximum de spires dans l'espace compris entre l'enveloppe extérieure du corps 27, le noyau central 28 et le boîtier 35 c'est-à-dire d'obtenir la force d'attraction électromagnétique maximale pour un courant donné.

Le boîtier 35 contenant le bobinage 29 est maintenu en place par une rondelle 39 en matériau non magnétique, emmanchée à force sur le noyau central 28.

A l'extrémité ouverte du corps 27 se trouve placé le plateau 30 dont la face frontale en regard est maintenue à un certain écartement minimal de la face frontale correspondante du corps 27 et du noyau central 28 même dans la position de la bille 32 sur son siège 34 correspondant à l'obturation du passage 33. Le plateau 30 est constitué du même matériau magnétique que le corps 27; il est également de préférence recuit après usinage. Le plateau 30 constitue donc la partie mobile du circuit magnétique constitué par le corps 27 et le noyau central 28 l'ensemble présentant des pertes par hystérésis réduites au maximum compte tenu du recuit précité.

La bille 32 maintenue dans son logement cylindrique 31 est impérativement réalisée en matériau non magnétique (cupro-béryllium, verre, alumine ou procelaine) afin de ne pas perturber le circuit magnétique tel que défini plus haut. L'alésage du logement 31 est réalisé de façon à permettre un mouvement convenable avec un léger jeu de la bille 32 à l'intérieur dudit logement. La partie centrale 40 du plateau 30 présente en outre quatre canalisations périphériques 41 traversant la partie centrale 40 et débouchant à la périphérie du logement 31. Ces canalisations périphériques 41 permettent d'évacuer le fluide hydraulique véhiculé par le passage centrale 33 et d'éviter ainsi tout effort parasite dû au fluide hydraulique en mouvement sur la partie centrale du plateau 30. On notera que la disposition périphérique des canalisations 41 permet d'éviter toute obturation par la bille 32 quelle que soit sa position.

La plateau 30 peut comporter en outre comme représenté dans le mode de réalisation illustré sur la fig. 3 des trous équidistants référencés 42 par exemple au nombre de six permettant d'alléger le plateau 30 dans la limite du respect d'une section suffisante pour éviter toute saturation magnétique.

On notera que le diamètre de la bille 32 est légèrement supérieur au diamètre du passage central 33 véhiculant le fluide hydraulique. De plus, la profondeur du logement 31 recevant la bille 32 est calculée de façon qu'il existe un minimum d'entrefer fonctionnel entre le noyau central 28 et le plateau 30 même lorsque la bille 32 vient en contact avec son siège 34.

L'extrémité ouverte du corps 27 recevant le plateau mobile 30 est usinée de façon à former un logement qui reçoit une bague 43 de faible épaisseur en matériau non magnétique interposée entre la surface périphérique interne de la partie ouverte du corps 27 et la surface périphérique externe du plateau 30. La présence de la bague non magnétique 43 évite un collage magnétique radial du plateau 30 sur la périphérie interne de l'extrémité ouverte du corps 27.

La surface périphérique externe 44 du plateau 30 présente de préférence une dépouille d'usinage. De plus, le diamètre maximal du plateau 30 laisse subsister un léger jeu à l'intérieur de la bague 43. De cette manière, on évite tout coincement du plateau mobile 30 à l'intérieur de la bague 43. Le maintien en position de la bague 43 et la limitation du déplacement vers l'extérieur du plateau 30 sont assurés par une bague de fermeture 45 fixée par sertissage en quatre points des bords extrêmes de l'enveloppe extérieure du corps 27. Le plateau 30 est donc monté totalement libre à l'intérieur du logement d'extrémité du corps 27 avec un léger jeu périphérique par rapport à la bague 43. La largeur de la bague 43 définit les dimensions de ce logement, la bague de fermeture 45 évitant simplement une chute du plateau hurs du son logement.

Lors du fonctionnement du dispositif, le courant envoyé dans la bobine 29 est unidirectionnel et pulsé et sa valeur moyenne est asservie au signal de commande. Le plateau mobile 30 se trouve animé d'un mouvement vibratoire pendant lequel le plateau 30 se place à l'intérieur de son logement de façon à venir en contact par un point des surfaces en regard du circuit magnétique. Le plateau 30 agit donc comme une palette ayant un point fixe d'articulation fictif situé à ce point de contact.

La bille 32 se trouve soumise par l'intermédiaire du plateau 30 à une force dynamique d'attraction électromagnétique tendant à fermer le passage 33. De plus, la bille 32 est soumise à une force de répulsion hydraulique tendant à ouvrir le passage 33. En fonction de la valeur du courant alimentant la bobine 29, la bille 32 se place à une distance du siège 34 telle que les forces précitées s'équilibrent. Il en résulte, comme dans un potentiomètre hydraulique de type classique, à la sortie 46 du dispositif, une pression hydraulique qui est fonction de la pression d'entrée dans la canalisation 25 ainsi que du rapport entre les deux sections des orifices de restriction du potentiomètre hydraulique. La restriction 26 étant fixe, il est possible de commander la pression de sortie en 46 en faisant varier comme il vient d'être dit la position de la bille 32 par rapport à son siège 34, c'est-àdire en modifiant l'effort s'appliquant sur le plateau mobile 30 effort qui est proportionnel au courant circulant dans la bobine 29.

Il est à noter que dans ce dispositif, on cumule les avantages d'un électro-aimant à plateau du point de vue magnétique et d'une bille du point de vue hydraulique et réalisation mécanique. En effet, la bille en matériau non magnétique est un volume de révolution parfait qui agit librement sans position préférentielle et sans contrainte particulière. De son côté l'électro-aimant à plateau dont la plateau mobile agit sur la bille est de définition simple. L'effet obtenu est proportionnel dans le cas présent aux sections des éléments en regard et à l'entrefer, éléments qui mécaniquement peuvent être définis de manière très précise.

Par ailleurs, le mouvement vibratoire du plateau mobile 30 a pour effet l'obtention d'un système stable dont les performances sont indépendantes de contraintes extérieurs et en particulier de vibrations auxquelles l'ensemble du dispositif est fréquemment soumis dans la pratique. Le mouvement vibratoire du plateau provoqué par le courant de commande pulsé alimentant la bobine 29 a en outre pour effet de réduire dans des proportions importantes l'hystérésis globale du système. Le montage du plateau à l'intérieur d'un logement à l'extrémité du corps magnétique et sans l'utilisation d'aucun organe de maintien supplémentaire permet d'obtenir une grande simplicité et une meilleure compacité du dispositif.

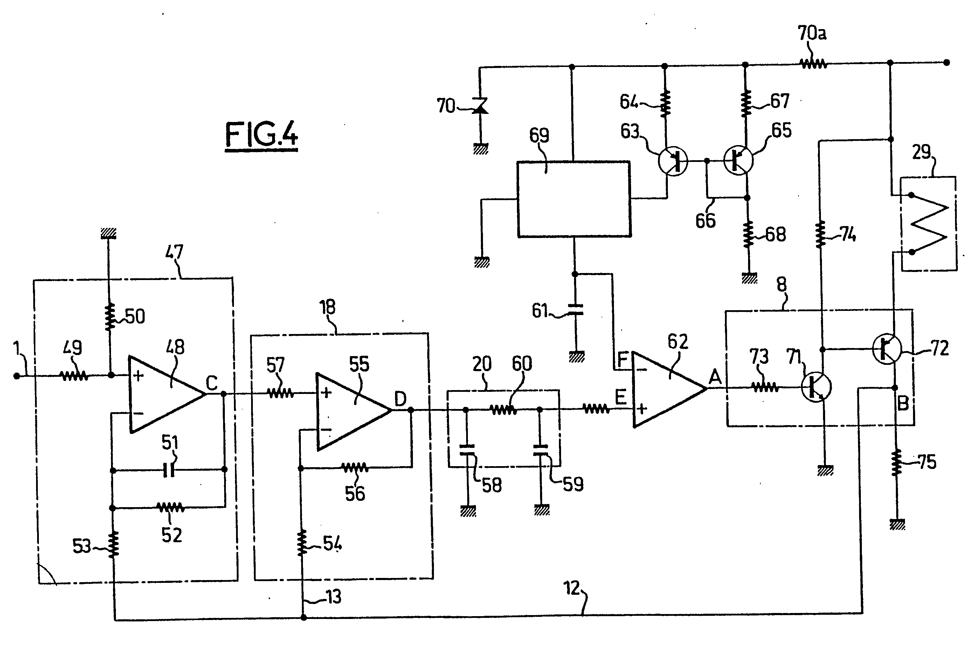

La fig. 4 illustre un mode de réalisation préféré de certains éléments du générateur électronique de commande de la fig. 2. Les éléments identiques portent les mêmes références.

Le bloc référencé 47 visible également sur la fig. 2, comprend un amplificateur opérationnel 48 recevant sur son entrée positive le signal de consigne 1 par l'intermédiaire du diviseur de tension constitué par les résistances 49 et 50. Le condensateur 51 monté entre la sortie et l'entrée négative de l'amplificateur opérationnel 48 constitue un intégrateur, la résistance 52 branchée aux bornes du condensateur 51 déterminant une contre réaction pour l'amplificateur 48. La résistance 53 montée en série sur l'entrée négative de l'amplificateur 48 détermine son gain. A la sortie de l'amplificateur 48 branché en amplificateur différentiel, on obtient finalement une tension résultant de la comparaison entre la grandeur de consigne 1 et le signal de retour véhiculé par la boucle de retour principale 12 qui est l'image du courant circulant dans la bobine 29 de l'électro-aimant.

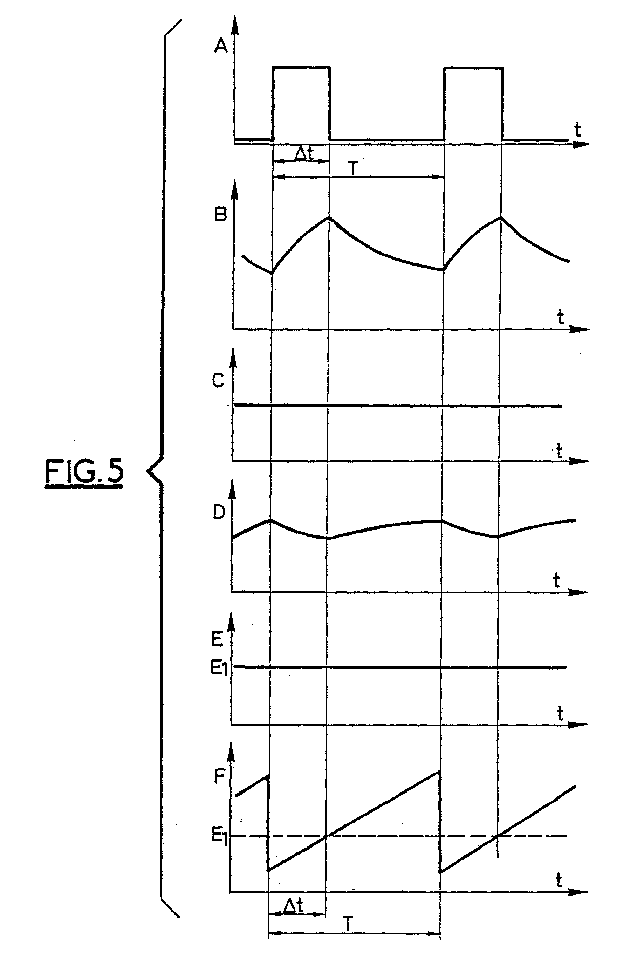

La tension image du courant instantané dans la bobine 29 de l'électro-aimant est envoyée par la résistance 54 sur l'entrée négative de l'amplificateur opérationnel 55 comportant une résistance de contre-réaction 56. L'amplificateur opérationnel 55 monté en amplificateur différentiel reçoit d'autre part sur son entrée positive par l'intermédiaire de la résistance 57, le signal de sortie C de l'amplificateur opérationnel 48 (voir fig. 5). A la sortie de l'amplificateur 55 on obtient un signal dont la tension D représentée sur la fig. 5 est la résultante de la grandeur de consigne 1 et des grandeurs proportionnelles à la fois au courant moyen et au courant instantané circulant dans la bobine 29 de l'électro-aimant. L'utilisation de la boucle secondaire de retour 13 contenant la résistance 54 permet d'améliorer les performances de l'asservissement notamment son temps de réponse.

Le signal D issu de l'amplificateur 55 est envoyé dans le circuit correcteur 20 comprenant les deux condensateurs 58 et 59 et la résistance 60 montés de manière classique afin d'améliorer la stabilité du système asservi. Le signal issu du circuit correcteur 20 dont la tension E est représentée sur la fig. 5 est comparé au signal de tension F prélevé aux bornes du condensateur 61 grâce à un élément 62 branché en comparateur. Le signal F visible sur la fig. 5 se présente sous la forme d'un signal triangulaire de période T donnée. Ce signal triangulaire est obtenu par la charge à courant constant du condensateur 61. Cette charge à courant constant est assurée par le transistor PNP 63 dont l'émetteur est relié à la tension d'alimentation par l'intermédiaire des résistances 70a et 64 et dont la base est reliée à la base du transistor PNP 65. Le transistor 65 dont la base et le collecteur sont en court-circuit par la connexion 66 permet d'assurer une compensation de température convenable. Le courant constant chargeant le condensateur 61 est déterminé par le rapport des résistances 67 et 68 reliées respectivement à l'émetteur et au collecteur du transistor 65. Le condensateur 61 se décharge périodiquement par l'intermédiare du circuit intégré 69 branché en multibrateur astable.

L'ensemble du circuit est alimenté par une tension de référence définie par la diode Zener 70.

La comparaison du signal de tension continue E du niveau $E_1$ par exemple et du signal triangulaire F permet d'obtenir à la sortie comparateur 62 un signal rectangulaire référencé A visible sur la fig. 5 dont la largeur $\Delta t$ est proportionnelle au niveau de tension $E_1$ du signal E. La période du signal A est quant à elle égale à la période T du signal F.

En effet, si le signal F est supérieur au niveau $E_1$ du signal E, la sortie du comparateur 62 est à une valeur basse proche de zéro. Si au contraire le signal F est inférieur au niveau $E_1$ du signal E, le comparateur 62 fournit en sortie un signal haut.

Le bloc 8 est un circuit de puissance formé par les deux transistors 71 et 72. Le transistor NPN 71 reçoit le signal A sur sa base par l'intermédiaire de la résistance 73 et se trouve relié par son collecteur par l'intermédiaire de la résistance 74 à l'une des bornes de la bobine 29 de l'électro-aimant. La base du transistor PNP 72 est reliée au collecteur du transistor 71 tandis que l'autre borne de la bobine 29 est reliée à l'émetteur du transistor 72. Le circuit de puissance 8 permet donc d'alimenter la bobine 29 de l'électro-aimant. Le courant circulant dans la bobine 29 de l'électro-aimant, du fait de la self-induction du circuit, présente en fonction du temps la forme B représentée à la fig. 5. Le courant circulant dans le collecteur du transistor 72 est pratiquement identique au courant circulant dans la bobine d'induction 29. Ce courant est prélevé aux bornes d'une faible résistance 75 reliant le collecteur du transistor 72 à la masse. Ce courant prélevé (signal B sur la fig. 5) du fait de sa structure unidirectionnelle pulsée, provoque une forte attraction électromagnétique qui communique au plateau 30 de la fig. 3 un mouvement vibratoire de faible amplitude.

Par ailleurs, le rapport cyclique du signal B c'est-àdire le rapport entre la durée $\Delta t$ pendant laquelle le signal A est haut et la période T, varie en fonction du niveau de tension $E_1$ du signal E c'est-à-dire en fonction de la valeur de consigne constituée par le niveau de tension du signal électrique de commande référencé 1 sur les figures.

On obtient donc grâce à la structure particulière du traducteur électrohydraulique à plateau selon l'invention et de son générateur électronique de commande associé fournissant un courant pulsé asservi, une pression hydraulique en stricte conformité avec la grandeur de consigne donnée par un signal électrique de commande, cette pression hydraulique étant en outre indépendante de toute perturbation extérieure et en particulier de toutes vibrations.

### Revendications

1. Dispositif traducteur électrohydraulique (4) permettant l'obtention d'une pression proportionnelle à un signal électrique de commande (1) comprenant une bobine d'électro-aimant (29) montée dans un corps magnétique (27) et alimentée en signaux électriques unidirectionnels pulsés correspondant au signal de commande précité et un plateau mobile (30) vibrant disposé au voisinage de l'extrémité frontale de la bobine (29), le plateau (30) étant soumis à la force d'attraction électromagnétique de la bobine (29) et coopérant avec une bille (32) réalisée en matériau non magnétique afin d'obturer plus ou moins un passage (33) pour le fluide hydraulique en fonction du signal de commande (1), la bille (32) étant soumise à une force de répulsion hydraulique et maintenue dans un logement (31) du plateau (30) de façon à être soumise, par l'intermédiaire du plateau, à la force d'attraction, caractérisé par le fait que le plateau mobile (30) est monté totalement libre avec un léger jeu périphérique à l'intérieur d'un logement pratiqué à l'extrémité du corps magnétique (27), la valeur moyenne des signaux unidirectionnels pulsés étant asservie au signal de commande (1) de façon à provoquer des vibrations du plateau (30) autour d'un point périphérique de contact entre ledit plateau et la surface interne de son logement.

2. Dispositif selon la revendication 1 dans lequel le corps magnétique (27) est muni d'un noyau fixe (28) à l'intérieur duquel est pratiqué un passage central (33) pour le fluide hydraulique, caractérisé par le fait que le plateau (30) présente dans sa partie centrale des canalisations (41) traversant le plateau et débouchant à la périphérie du logement (31) précité de façon à ne pas pouvoir être obturées par la bille (32) quelle que soit la position de la bille.

3. Dispositif selon les revendications 1 ou 2, caractérisé par le fait que le plateau (30) est monté à l'intérieur d'une bague (43) en matériau non magnétique solidaire des bords extrêmes du corps magnétique (27).

4. Dispositif selon l'une des revendications 1 à 3, caractérisé par le fait que la surface périphérique du plateau (30) présente une dépouille (44) évitant son coincement lors de son mouvement vibratoire.

5. Dispositif selon l'une des revendications précédentes, caractérisé par le fait que la profondeur du logement (31) recevant la bille (32) est telle qu'il subsiste un entrefer entre le noyau (28) du circuit magnétique et le plateau (30) même lorsque la bille (32) est en contact avec son siège (34).

6. Dispositif selon l'une des revendications précédentes, comprenant un générateur électronique de commande (2) fournissant les signaux électriques pulsés (3) à la bobine d'électro-aimant (29), caractérisé par le fait que le générateur (2) est conçu de façon à produire des signaux unidirectionnels de période fixe dont le rapport cyclique varie en fonction du niveau de tension du signal électrique de commande (1).

7. Dispositif selon la revendication 6, caractérisé par le fait que le générateur de commande (2) comprend un circuit d'asservissement (47, 18, 20) de la valeur moyenne du courant alimentant la bobine d'électro-aimant (29) à la valeur de consigne constituée par le signal de commande (1) et un comparateur (24, 62) recevant le signal de sortie (E) du circuit d'asservissement et un signal périodique extérieur (F).

8. Dispositif selon la revendication 7, caractérisé par le fait que le circuit d'asservissement (47, 18, 20) comprend une boucle de retour secondaire (13) pour la valeur instantanée du courant (3) dans la bobine d'électro-aimant (29).

9. Dispositif selon les revendications 7 ou 8, caractérisé par le fait qu'il comprend un convertisseur tension-durée (7) comportant une capacité (61) chargée à courant constant et déchargée périodiquement par un multivibrateur astable (69) pour fournir le signal périodique extérieur (F) précité.

10. Dispositif selon l'une quelconque des revendications 7 à 9, caractérisé par le fait que la boucle de retour principale (12) du circuit d'asservissement (47, 18, 20) comprend un intégrateur (14) fournissant un signal représentant la valeur moyenne du courant (3) dans la bobine d'électro-aimant (29).

11. Application du dispositif traducteur électrohydraulique selon l'une quelconque des revendications précédentes au contrôle de pression dans un circuit hydraulique de commande d'une transmission automatique, caractérisée par le fait que le dispositif (4) est monté dans le circuit hydraulique de façon que la bille (32) précitée forme sur son siège (34) une restriction variable d'un potentiomètre hydraulique.

**Patentansprüche**

1. Elektrisch-hydraulische Wandlervorrichtung (4), die es ermöglicht, einen einem elektrischen Steuersignal (1) proportionalen Druck zu erhalten, die eine Magnetspule (29), die auf einem Magnetgehäuse (27) montiert ist und der gepulste einseitig gerichtete elektrische Signale zugeführt werden, die dem vorgenannten Steuersignal entsprechen, sowie eine bewegliche schwingende Scheibe (30), die am Vorderende der Spule (29) angeordnet ist, enthält, wobei die Scheibe (30) der elektromagnetischen Anziehungskraft der Spule (29) unterliegt und mit einer Kugel (32) zusammenwirkt, die aus nichtmagnetischem Material besteht, um einen Durchlaß (33) für die Hydraulikflüssigkeit in Abhängigkeit vom Steuersignal (1) mehr oder weniger zu verschließen wobei die Kugel (32) einer hydraulischen Abstoßkraft unterliegt und in einem Sitz (31) der Scheibe (30) festgehalten wird, um vermittels der Scheibe der Anziehungskraft ausgesetzt zu werden, dadurch gekennzeichnet, daß die bewegliche Scheibe (30) mit einem kleinen peripheren Spiel im Inneren eines Sitzes, der an den äußeren Stellen des Magnetgehäuses (27) eingearbeitet ist, völlig frei montiert ist, wobei der Mittelwert der gepulsten einseitig gerichteten Signale vom Steuersignal (1) geregelt wird, so daß die Scheibe (30) um einen Berührungspunkt am Umfang zwischen der genannten Scheibe und der Innenfläche ihres Sitzes in Schwingungen versetzt wird.

2. Vorrichtung gemäß Anspruch 1, in dem das Magnetgehäuse (27) mit einem festen Kern (28) versehen ist, in dessen Inneren ein zentraler Durchlaß (33) für die hydraulische Flüssigkeit eingearbeitet ist, dadurch gekennzeichnet, daß die Scheibe (30) in ihrem Mittelteil Kanäle (41) aufweist, die durch die Scheibe gehen und am Umfang des vorgenannten Sitzes (31) münden so daß sie von der Kugel (32) unabhängig von deren Stellung nicht verschlossen werden können.

3. Vorrichtung gemäß Ansprüchen 1 oder 2, dadurch gekennzeichnet, daß die Scheibe (30) im Inneren eines Rings (43) aus nichtmagnetischem Material montiert ist, der mit den äußeren Rändern des Magnetgehäuses (27) fest verbunden ist.

4. Vorrichtung gemäß einem der Ansprüche 1 bis 3, dadurch gekennzeichnet, daß die Umfangsfläche der Scheibe (30) eine Schräge (44) aufweist, die bei der Schwingungsbewegung ein Klemmen verhindert.

5. Vorrichtung gemäß einem der vorstehenden Ansprüche, dadurch gekennzeichnet, daß die Tiefe des Sitzes (31), der die Kugel (32) aufnimmt, so groß ist, daß zwischen dem Kern (28) des Magnetkreises und der Platte (30) ein Spalt bleibt selbst wenn die Kugel (32) mit ihrem Sitz (34) in Berührung steht.

6. Vorrichtung gemäß einem der vorstehenden Ansprüche, die einen elektronischen Steuergenerator (2) enthält, der die gepulsten elektrischen Signale (3) an die Magnetspule (29) liefert, dadurch gekennzeichnet, daß der Generator (2) so ausgelegt ist, daß er einseitig gerichtete Signale mit fester Periode erzeugt, deren zyklisches Verhältnis in Abhängigkeit von der Spannungshöhe des elektrischen Steuersignals (1) variiert.

7. Vorrichtung gemäß Anspruch 6, dadurch gekennzeichnet, daß der Steuergenerator (2) einen Regelkreis (47, 18, 20) zum Regeln des Mittelwerts des Speisestroms der Magnetspule (29) mit dem Sollwert, der aus dem Steuersignal (1) besteht, und ein Differenzierglied (24, 26), das das Ausgangssignal (E) des Regelkreises und ein periodisches Signal von außen aufnimmt, enthält.

8. Vorrichtung gemäß Anspruch 7, dadurch gekennzeichnet, daß der Regelkreis (47, 18 20) eine sekundäre Rückführschleife (13) für den Augenblickswert des Stroms (3) in der Magnetspule (29) enthält.

9. Vorrichtung gemäß Ansprüchen 7 oder 8, dadurch gekennzeichnet, daß sie einen Spannungs-Zeit-Wandler (7) umfaßt, der eine Kapazität (61) enthält, die mit konstantem Strom geladen ist und periodisch über einem astabilen Multivibrator (69) entladen wird um das vorgennante periodische Signal (F) von außen zu liefern.

10. Vorrichtung gemäß einem beliebigen der Ansprüche 7 bis 9, dadurch gekennzeichnet, daß die Hauptrückführschleife (12) des Regelkreises (47, 18, 20) einen Integrator (14) enthält, der ein Signal liefert, das dem Mittelwert des Stroms (3) in der Magnetspule (29) entspricht.

11. Anwendung eines elektrisch-hydraulischen Wandlers gemäß einem beliebigen der obigen Ansprüche zur Steuerung des Drucks in einem hydraulischen Steuerkreis eines automatischen Übersetzungsgetriebes, dadurch gekennzeichnet, daß die Vorrichtung (4) in dem hydraulischen Steuerkreis so angeordnet ist, daß die vorgenannte Kugel (32) über ihrem Sitz (34) eine variable Drossel eines hydraulischen Potentiometers bildet.

**Claims**

1. An electrohydraulic transducer (4) enabling a pressure to be obtained which is proportional to an electric control signal (1) comprising a solenoid coil (29) installed in a magnetic body (27) and supplied with pulsed unidirectional electric signals corresponding to the above-mentioned control signal and a free moving vibrating plate (30) placed near to the front end of the coil (29) with the plate (30) being acted on by the electromagnetic attractive force of the coil (29) and engaging with a ball (32) made of non-magnetic material so as to close a passage (33) for the hydraulic fluid to a greater or lesser extent depending on the control signal (1), the ball (32) being acted on by a hydraulic repulsive force and held inside a cavity (31) in the plate (30) so as to be acted on, through the plate, by the attractive force, characterized in that the free moving plate (30) is installed to be quite free with a slight peripheral clearance inside a recess made in the end of the magnetic body (27), the mean value of the pulsed unidirectional signals being regulated by the control signal (1) so as to make the plate (30) vibrate round a peripheral point of contact between this plate and the inside surface of its housing recess.

2. The transducer according to claim 1 wherein the magnetic body (27) is fitted with a fixed core (28) inside which a central passage (33) is made for the hydraulic fluid, characterized in that the plate (30) has ducts (41) in its central portion passing through the plate and coming out at the periphery of the above-mentioned cavity (31) so as not to be closed by the ball (32) in any position of the ball.

3. The transducer according to claims 1 or 2, characterized in that the plate (30) is installed inside a ring (43) made of non-magnetic material and fixed to the outer edges of the magnetic body (27).

4. The transducer according to any of claims 1 to 3, characterized in that the peripheral surface of the plate (30) is relieved (44) to prevent it getting jammed during its vibratory motion.

5. The transducer according to any of the preceding claims, characterized in that the depth of the cavity (31) taking the ball (32) is such that a gap remains between the core (28) of the magnetic circuit and the plate (30) even when the ball (32) is in contact with its seat (34.

6. The transducer according to any of the preceding claims, comprising an electronic control generator (2) feeding the pulsed electric signals (3) to the solenoid coil (29), characterized in that the generator (2) is so designed as to produce fixed-period unidirectional signals the cyclic ratio of which varies with the voltage level of the electric control signal (1).

7. The transducer according to claim 6, characterized in that the control generator (2) comprises a control circuit (47, 18, 20) regulating the mean value of the current feeding the solenoid coil (29) to the setpoint value consisting of the control signal (1), and a comparator (24, 62) receiving the output signal (E) from the control signal and an external periodic signal.

8. The transducer according to claim 7, characterized in that the control circuit (47, 18, 20) comprises a secondary feedback loop (15) for the instantaneous value of the current (3) in the solenoid coil (29).

9. The transducer according to claims 7 or 8, characterized in that it comprises a voltage-time (7) converter comprising a capacitance (61) charged at constant current and discharged periodically by an astable multivibrator (69) in order to supply the above-mentioned external periodic signal.

10. The transducer according to any of claims 7 to 9, characterized in that the main feedback loop (12) of the control circuit (47, 18, 20) comprises an integrator (14) supplying a signal representing the mean value of the current (3) in the solenoid coil (29).

11. An application of the electrohydraulic transducer according to any of the preceding claims to regulating the pressure in a hydraulic circuit controlling an automatic transmission, characterized in that the transducer (4) is installed in the hydraulic circuit in such a way that the above-mentioned ball (32) forms on its seat (34) a variable restrictor of a hydraulic potentiometer.

FIG.1

FIG.2

FIG.3

FIG.4

FIG.5